# EUROPÄISCHE PATENTSCHRIFT

(11) **EP 1 210 572 B1**
(45) Veröffentlichungstag und Bekanntmachung des Hinweises auf die Patenterteilung: **27.04.2005**
(21) Anmeldenummer: 01964856.7
(22) Anmeldetag: 25.07.2001
(51) Int. Cl.: G01L 3/00, G01D 5/48, G01B 15/00, H01P 1/203

(54) **DREHWINKEL MIT MIKROSTREIFENLEITERRESONATOREN ( 2,4 GHZ, 2 GRAD )**
MEASUREMENT OF ANGLE OF ROTATION USING MICROSTRIP RESONATORS (2.4 GHZ, 2 DEGREE)
MESURE D'UN ANGLE DE ROTATION A L'AIDE DE RESONATEURS A CONDUCTEURS SOUS FORME DE MICROBANDES (2,4GH, 2 DEGRES)

(30) Priorität: 11.08.2000 DE 10039217
(43) Veröffentlichungstag der Anmeldung: 05.06.2002
(73) Patentinhaber: ROBERT BOSCH GMBH, 70442 Stuttgart (DE)
(72) Erfinder: NEUMANN, Christian, 70178 Stuttgart (DE); SCHMIDT, Ralf, 70839 Gerlingen (DE)
(86) Internationale Anmeldenummer: PCT/DE2001/002813
(87) Internationale Veröffentlichungsnummer: WO 2002/014818

(56) Entgegenhaltungen:
- EP-A- 0 851 215
- DE-A- 19 712 374
- US-A- 5 659 274

## Beschreibung

### Stand der Technik

Die vorliegende Erfindung betrifft eine Vorrichtung und ein Verfahren zur berührungslosen Erfassung eines Drehwinkels bzw. einer Torsionsverdrehung. Insbesondere betrifft die vorliegende Erfindung eine Vorrichtung und ein Verfahren zur berührungslosen Erfassung von sehr kleinen Winkeln bzw. sehr kleinen Torsionsverdrehungen.

Messvorrichtungen zur berührungslosen Erfassung von Drehwinkeln, wie z.B. Drehmomentsensoren, sind in unterschiedlichsten Ausgestaltungen bekannt. Teilweise basieren derartige Messvorrichtungen auf unterschiedlichen Prinzipien. Beispielsweise sind optische Sensoren bekannt, welche über einen an dem sich drehenden Teil angebrachten Code den Drehwinkel detektieren. Weiter sind Magnetsensoren bekannt, bei denen sich in Abhängigkeit des Drehwinkels ein magnetisch erzeugtes Feld verändert, wobei diese Veränderung als Maß für den Drehwinkel verwendet werden kann. Bei diesen auf dem Magnetprinzip beruhenden Sensoren ist von Nachteil, dass diese auf einer komplizierten Schichttechnologie basieren sowie ihr Aufbau relativ kompliziert ist und daher ihre Herstellung sehr teuer ist. Die optischen Sensoren sind hingegen sehr anfällig gegen Verschmutzung und sind daher beispielsweise im Kraftfahrzeug nur bedingt einsatzfähig bzw. weisen eine relativ kurze Lebensdauer auf, da sie häufig unter extremen Bedingungen eingesetzt werden.

### Vorteile der Erfindung

Die erfindungsgemäße Messvorrichtung zur berührungslosen Erfassung eines Drehwinkels bzw. einer Torsionsverdrehung mit den Merkmalen des Patentanspruchs 1 hat demgegenüber den Vorteil, dass sie z.B. eine Änderung einer Resonanzfrequenz als Maß für die Ermittlung des Drehwinkels bzw. der Torsionsverdrehung verwendet. Hierbei ist ein erster Resonator und ein zweiter Resonator vorgesehen, wobei mindestens ein Resonator mit dem sich drehenden Element (z.B. einer Welle), dessen Drehwinkel bestimmt werden soll, verbunden ist. Die Resonatoren weisen einen im wesentlichen kreisförmigen Umfang auf. Weiter ist am Umfang der Resonatoren jeweils mindestens ein Vorsprung und/oder eine Aussparung ausgebildet und die Resonatoren sind koplanar zueinander angeordnet. Über eine Erregervorrichtung werden die Resonatoren angeregt und bei einer Drehung der Resonatoren relativ zueinander ändert sich die Position der Vorsprünge bzw. Aussparungen der Resonatoren, wodurch sich auch die jeweilige Resonanzfrequenz ändert. Diese Änderung der Resonanzfrequenz ist ein Maß für eine Änderung des Drehwinkels bzw. der Torsionsverdrehung. Es ist jedoch auch möglich, die Amplitude des von den Resonatoren rückgestreuten Signals bei einer festen Frequenz (z.B. einer Frequenz in der Flanke der Resonatorkurve) zu bestimmen und als Maß für den Drehwinkel bzw. die Torsionsverdrehung zu benutzen. Erfindungsgemäß lassen sich somit insbesondere sehr kleine Winkeländerungen erfassen.

Vorzugsweise sind die beiden Resonatoren ringförmig ausgebildet. Dadurch lässt sich ein einfacher Aufbau und eine leichte Herstellbarkeit der erfindungsgemäßen Messvorrichtung erreichen.

Gemäß einer anderen bevorzugten, leicht herstellbaren Ausgestaltung der vorliegenden Erfindung sind die Resonatoren kreisförmig gebildet.

Bei einer vorteilhaften Ausbildung der Erfindung ist die Aussparung der Resonatoren als Schlitz ausgebildet.

Um eine gute Anregung der Resonatoren zu ermöglichen, ist der Schlitz in den ringförmigen Resonatoren durchgehend ausgebildet.

Um eine besonders kompakte Messvorrichtung zu erreichen, weist bei ringförmigen Resonatoren der erste Resonator einen kleineren Außendurchmesser als der zweite Resonator auf. Besonders vorteilhaft ist der Außendurchmesser des ersten Resonators kleiner als der Innendurchmesser des zweiten Resonators.

Bevorzugterweise sind die Resonatoren aus Leiterplattenmaterial mit einer darauf angebrachten Metallisierung hergestellt. Dadurch können die Herstellungskosten für die erfindungsgemäße Messvorrichtung niedrig gehalten werden. Es ist jedoch auch möglich, dass an Stelle des Leiterplattenmaterials z.B. ein keramisches Material verwendet wird. Bei der Materialauswahl ist wichtig, dass als Trägermaterial der Metallisierung ein nichtleitendes Material verwendet wird.

Vorzugsweise werden Resonatoren über eine Antenne angeregt. Dabei ist es auch möglich, dass über die gleiche Antenne eine Reflexion der Streuparatmeter gemessen wird, welcher eine Aussage über die Resonanzfrequenz und somit den Winkel zwischen den Vorsprüngen bzw. Schlitzen der Resonatoren ermöglicht. Wenn die erfindungsgemäße Messvorrichtung mit genau einer Frequenz angeregt wird, welche vorzugsweise in der Flanke der Resonanzkurve liegt, kann die Antenne auch die Amplitude des rückgestreuten Signals aufnehmen, welches Aufschluß über die Stellung der Vorsprünge bzw. Aussparungen der Ringresonatoren zueinander gibt. Hierbei kann bei einer geeigneten Wahl der Frequenz bei vorgegebener Resonanzkurve ein nahezu lineares Signal erhalten werden, wodurch sich eine besonders einfache Auswertung des Signals zu den entsprechenden Drehwinkeln ergibt. Es ist jedoch auch denkbar, dass eine separate Erregerantenne und eine separate Empfangsantenne vorgesehen sind. Dabei können die Resonatoren dann zwischen der Erreger- und der Empfangsantenne angeordnet werden.

Um eine besonders hohe Genauigkeit, d.h. die Messung von sehr kleinen Winkeln, zu ermöglichen, sind die Resonatoren in einer Ausgangsstellung derart zueinander angeordneten, dass in den Resonatoren gebildete Schlitze in einer Ebene liegen, welche senkrecht zu den Resonatoren angeordnet ist.

Vorteilhaft werden die Resonatoren mit einem Mikrowellenspektrum angeregt oder die Resonatoren werden mit genau einer Frequenz angeregt, wobei die Frequenz in der Flanke der Resonanzkurve liegt.

Weiterhin ist es auch möglich, dass drei oder mehr Resonatoren in einer Messvorrichtung eingesetzt werden.

Bei dem erfindungsgemäßen Verfahren zur Ermittlung eines Drehwinkels werden die beiden mit mindestens einem Vorsprung und/oder einer Aussparung versehenen Resonatoren angeregt. Bei einer Drehung der beiden, einen im wesentlichen kreisförmigen Umfang aufweisenden Resonatoren relativ zueinander ändert sich das rückgestreute Signal, wobei die Änderung des rückgestreuten Signals proportional zu einer Relativdrehung der beiden Resonatoren zueinander ist. Daher kann das rückgestreute Signal als Maß für den Drehwinkel bzw. die Torsionsverdrehung verwendet werden. Mit anderen Worten verwendet das erfindungsgemäße Verfahren eine Änderung einer Resonanzfrequenz oder eine Änderung einer Amplitude einer gewählten Frequenz zur Ermittlung eines Drehwinkels.

Erfindungsgemäß wird somit eine robuste, einfach herstellbare und kostengünstige Messvorrichtung insbesondere für kleine Winkel bereitgestellt. Die erfindungsgemäße Messvorrichtung wird vorzugsweise an Lenkgestängen oder zur Ermittlung der Stellung der Drosselklappe eingesetzt.

### Zeichnung

Mehrere Ausführungsbeispiele der Erfindung sind in der Zeichnung dargestellt und werden in der nachfolgenden Beschreibung näher erläutert. Es zeigen:
Figur 1 eine Draufsicht auf eine Anordnung von Metallisierungen zweier Resonatoren gemäß einem ersten Ausführungsbeispiel der vorliegenden Erfindung,
Figur 2 eine Schnittdarstellung einer Messvorrichtung zur berührungslosen Erfassung eines Drehwinkels gemäß dem ersten Ausführungsbeispiel der vorliegenden Erfindung,
Figur 3 eine Schnittdarstellung einer Messvorrichtung zur berührungslosen Erfassung eines Drehwinkels gemäß einem zweiten Ausführungsbeispiel der vorliegenden Erfindung,
Figur 4 eine Schnittdarstellung einer Messvorrichtung zur berührungslosen Erfassung eines Drehwinkels gemäß einem dritten Ausführungsbeispiel der vorliegenden Erfindung,
Figur 5a eine Draufsicht eines ersten Resonators gemäß einem vierten Ausführungsbeispiel der vorliegenden Erfindung,
Figur 5b eine Draufsicht eines zweiten Resonators gemäß dem vierten Ausführungsbeispiel,
Figur 6a eine Draufsicht eines ersten Resonators gemäß einem fünften Ausführungsbeispiel der vorliegenden Erfindung,
Figur 6b eine Draufsicht eines zweiten Resonators gemäß dem fünften Ausführungsbeispiel,
Figur 7a eine Draufsicht eines Resonators gemäß einem sechsten.Ausführungsbeispiel der vorliegenden Erfindung,
Figur 7b eine Draufsicht eines zweiten Resonators gemäß dem sechsten Ausführungsbeispiel,
Figur 8 eine Darstellung der Frequenzverschiebung bei einer relativen Drehung der in den Figuren 7a und 7b dargestellten Resonatoren gemäß dem sechsten Ausführungsbeispiel der vorliegenden Erfindung,
Figur 9 eine Darstellung einer Änderung des Signals bei einer ersten festen Frequenz in Abhängigkeit von der Verdrehung der beiden in Figur 7a und 7b dargestellten Resonatoren gemäß dem sechsten Ausführungsbeispiel der vorliegenden Erfindung und
Figur 10 eine Darstellung einer Änderung des Signals bei einer zweiten festen Frequenz in Abhängigkeit von der Verdrehung der in den Figuren 7a und 7b dargestellten Resonatoren gemäß dem sechsten Ausführungsbeispiel der vorliegenden Erfindung.

### Beschreibung der Ausführungsbeispiele

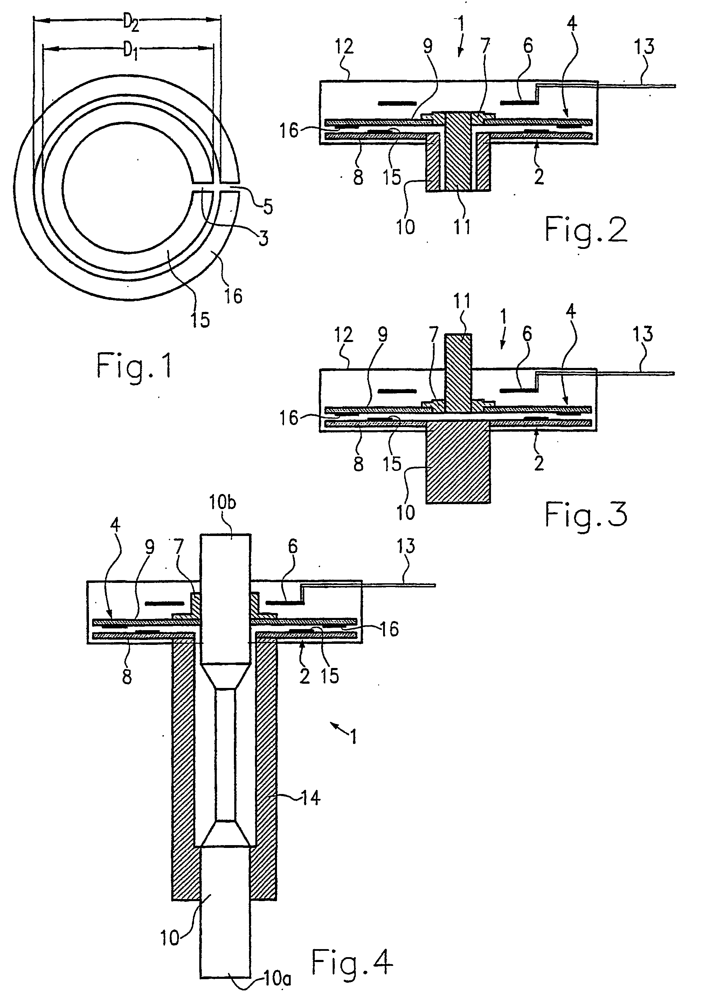

In den Figuren 1 und 2 ist eine erste erfindungsgemäße Messvorrichtung zur berühungslosen Erfassung eines Drehwinkels dargestellt. Die Messvorrichtung 1 umfaßt einen ersten Resonator 2 und einen zweiten Resonator 4. Die Resonatoren 2 und 4 bestehen aus jeweils einer Trägerplatte 8 bzw. 9 und einer darauf angebrachten Metallisierung 15 bzw. 16 (vgl. Figur 2). Die Trägerplatten 8, 9 sind aus einem Leiterplattenmaterial hergestellt. Wie in Figur 1 gezeigt, weist die Metallisierung 15 des ersten Resonators 2 einen Schlitz 3 auf und die Metallisierung 16 des zweiten Resonators 4 weist einen Schlitz 5 auf. In Figur 1 sind die beiden ringförmig ausgebildeten Metallisierungen 15, 16 der Resonatoren 2 und 4 in ihrer Ausgangsstellung dargestellt. Es sei angemerkt, dass neben der in Figur 1 dargestellten Ausgangsstellung auch Ausgangsstellungen mit zueinander verdrehten Schlitzen möglich sind. Dadurch kann eine gesteigerte Empfindlichkeit erreicht werden. Weiter ist bei zueinander verdrehten Schlitzen auch die Drehrichtung auf einfache Weise meßbar.

Dabei sind die beiden Resonatoren 2 und 4 derart zueinander ausgerichtet, dass in der Ausgangsstellung der Schlitz 3 und der Schlitz 5 in einer Ebene senkrecht zu den beiden Resonatoren liegen. Der Aussendurchmesser D₁ der Metallisierung 15 des ersten Resonators 2 ist dabei kleiner als der Innendurchmesser D₂ der Metallisierung 16 des zweiten Resonators 4. Die beiden Resonatoren 2, 4 liegen in zueinander parallelen Ebenen und weisen einen definierten Abstand zwischen sich auf.

Wie in Figur 2 gezeigt, sind die beiden Resonatoren 2 und 4 koplanar zu einander ausgerichtet. Die Trägerplatte 8 des Resonators 2 ist direkt an einer ersten Welle 10 befestigt. Die Trägerplatte 9 des Resonators 4 ist über ein Verbindungsstück 7 an einer zweiten Welle 11 befestigt. Hierbei ist die erste Welle 10 als Hohlwelle ausgebildet und in ihrem Inneren ist die zweite Welle 11 angeordnet. Beispielsweise kann die zweite Welle 11 mit der Drehachse einer Drosselklappe verbunden werden, um die jeweilige Stellung der Drosselklappe zu ermitteln.

Weiter ist eine ringförmige Antenne 6 vorgesehen, welche über eine Leitung 13 mit einer Steuer- und Auswerteeinheit verbunden ist. Die Antenne 6 dient als gemeinsame Erreger- und Empfangsvorrichtung. Zur Abschirmung gegen äußere Störgrössen ist eine als Gehäuse dienende Abschirmung 12 vorgesehen.

Die Funktion der Messvorrichtung 1 gemäß dem ersten Ausführungsbeispiel ist wie folgt. Über die Antenne 6 wird die Messvorrichtung mit einem Mikrowellenspektrum angeregt. Die Antenne 6 mißt auch die Reflexion der Streuparameter. Wenn sich nun infolge einer Drehung der Welle 11 der erste Resonator 2 relativ zum zweiten Resonator 4 um die Mittelachse dreht, ändert sich die Resonanzfrequenz der Messvorrichtung. Diese Änderung der Resonanzfrequenz kann in einer Auswerteelektronik einem Drehwinkel zur Bestimmung der Verdrehung zwischen dem ersten Resonator 2 und dem zweiten Resonator 4 zugeordnet werden. Somit kann der Drehwinkel zwischen dem ersten Resonator 2 und dem zweiten Resonator 4 bestimmt werden und somit die relative Drehung der ersten Welle 10 zur zweiten Welle 11.

Aufgrund der Verwendung der Resonatoren und der Antenne ist die erfindungsgemäße Messvorrichtung sehr robust gegen äußere Einflüsse und einfach herstellbar. Weiter ist sie nicht gegen Verschmutzung anfällig und kann somit eine lange Lebensdauer aufweisen. Insbesondere ist auch eine sehr genaue Erfassung von nur sehr kleinen Drehwinkeln möglich.

In Figur 3 ist eine Messvorrichtung 1 gemäß einem zweiten Ausführungsbeispiel der vorliegenden Erfindung dargestellt. Gleiche bzw. gleichartige Teile sind mit den gleichen Bezugszeichen wie im ersten Ausführungsbeispiel bezeichnet.

Im Gegensatz zum ersten Ausführungsbeispiel sind beim zweiten Ausführungsbeispiel die erste Welle 10 und die zweite Welle 11 einander gegenüberliegend angeordnet. Die zweite Welle 11 ist über ein Verbindungsstück 7 mit der Trägerplatte 9 des zweiten Resonators 4 verbunden, welche eine Metallisierung 16 des zweiten Resonators 4 trägt. Eine Metallisierung 15 des ersten Resonators 2 ist auf der ersten Trägerplatte 8 angeordnet, welche ihrerseits mit der ersten Welle 10 verbunden ist. Eine Antenne 6 ist über eine Leitung 13 mit einer nicht dargestellten Auswerteelektronik verbunden. Eine Abschirmung 12 schirmt die Messvorrichtung 1 gegen äußere Einflüsse ab.

Die Funktionsweise der Messvorrichtung 1 gemäß dem zweiten Ausführungsbeispiel entspricht der des ersten Ausführungsbeispiels und wird daher nicht weiter dargestellt.

In Figur 4 ist ein drittes Ausführungsbeispiel einer erfindungsgemäßen Messvorrichtung 1 zur Erfassung von Torsionsverdrehungen einer Welle 10 gezeigt. Gleiche bzw. gleichartige Teile sind wieder mit den gleichen Bezugszeichen wie in den beiden vorangegangenen Ausführungsbeispielen bezeichnet.

Die beiden Resonatoren 2 und 4 umfassen jeweils eine Trägerplatte 8 bzw. 9 und weisen ringförmig ausgebildete Metallisierungen 15 bzw. 16 auf. Die Welle 10 befindet sich über ein Verbindungsstück 7 mit der zweiten Trägerplatte 9 in Verbindung sowie über ein Verbindungsstück 14 auch mit der ersten Trägerplatte 8 in Verbindung. Hierbei ist das zweite Verbindungsstück 14 als Hohlwelle ausgebildet, welche die Welle 10 in sich aufnimmt. Eine über eine Leitung 13 mit einer Auswerteeinheit verbundene Antenne 6 dient als Erreger- und Empfangsvorrichtung.

Durch die Ausgestaltung der Messvorrichtung gemäß dem dritten Ausführungsbeispiel ist es möglich, Torsionsverdrehungen der Welle 10 zwischen einem ersten Wellenabschnitt 10a und einem zweiten Wellenabschnitt 10b zu ermitteln. Da durch die Verwendung der Resonatoren auch schon sehr kleine Verdrehungen aufgenommen werden können, können somit auch sehr kleine Torsionsverdrehungen der Welle 10 bestimmt werden. Die Messvorrichtung gemäß dem dritten Ausführungsbeispiel kann insbesondere an einer Lenkstange zur Ermittlung einer Stärke eines Lenkeinschlags verwendet werden.

Die Funktion der Messvorrichtung gemäß dem dritten Ausführungsbeispiel entspricht dem der ersten beiden Ausführungsbeispiele und wird daher nachfolgend nicht weiter erläutert. Es ist jedoch anzumerken, dass die Messvorrichtung gemäß dem dritten Ausführungsbeispiel einfach an beliebigen Positionen einer Welle angeordnet werden kann und deren Torsionsverdrehung bestimmt werden kann.

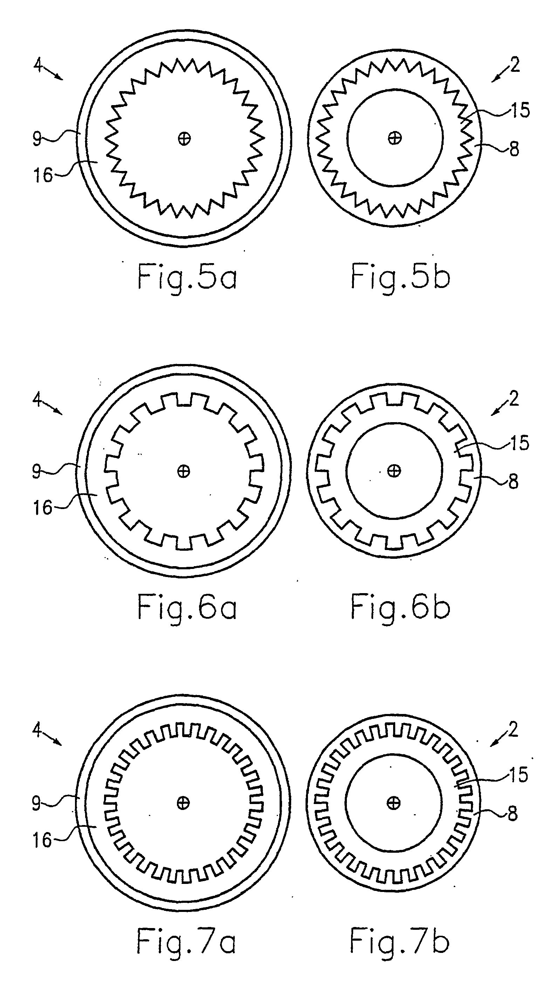

In den Figuren 5a und 5b sind die Metallisierungen von zwei Resonatoren 2 und 4 gemäß einem vierten Ausführungsbeispiel der vorliegenden Erfindung dargestellt. Gleiche bzw. gleichartige Teile sind mit den gleichen Bezugszeichen wie in den vorher beschriebenen Ausführungsbeispielen bezeichnet.

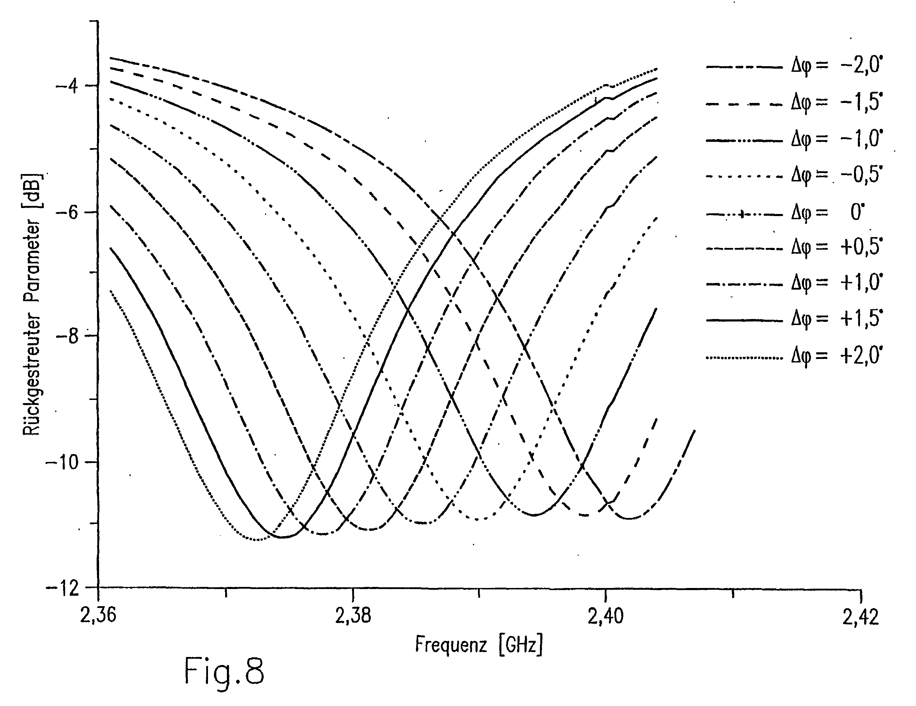

Wie in Figur 5b gezeigt, steht ein erster Resonator 2 aus einer Trägerplatte 8 sowie einer darauf angebrachten Metallisierung 15. Die Metallisierung 15 ist ringförmig ausgebildet und weist an ihrem äußeren Umfang eine Vielzahl von zackenförmig vorstehenden Bereichen auf. Der in Figur 5a dargestellte zweite Resonator 4 umfasst ebenfalls eine Trägerplatte 9 sowie eine ringförmig ausgebildete Metallisierung 16. Wie in Figur 5a gezeigt, weist die Metallisierung 16 an ihrem inneren Umfangsrand zackenförmige Aussparungen auf, welche den zackenförmigen Vorsprüngen der Metallisierung 15 des ersten Resonators 2 entsprechen. In der Ausgangslage der beiden Resonatoren 2 und 4 können die beiden Resonatoren 2, 4 derart zueinander angeordnet sein, dass die zackenförmigen Vorsprünge der Metallisierung 15 genau über den zackenförmigen Aussparungen der Metallisierung 16 liegen (Fall 1), dass die Zacken genau symmetrisch übereinander liegen (Fall 2) und dass die Zacken eine Zwischenstellung zwischen Fall 1 und Fall 2 einnehmen (Fall 3), in welcher sich die Zacken nur teilweise an ihren Flanken überlappen. In den Fällen 1 und 2 befindet sich das Signal der Ausgangsstellung im unteren Scheitelpunkt der in Figur 8 gezeigten Kurven. Dadurch ist bei einer Verdrehung in die eine oder andere Richtung keine Bestimmung der Drehrichtung möglich, da die Kurven im wesentlichen symmetrisch zum unteren Scheitelpunkt der Kurve sind. Bei der Zwischenstellung nach Fall 3 ist das Signal der Ausgangsstellung in einem ansteigenden oder abfallenden Kurvenbereich (vgl. Figur 8), so dass auch die Drehrichtung je nach ansteigendem oder abfallendem Wert bestimmt werden kann. Im Fall 1 überlappen bei einer Drehung der beiden Resonatoren 2 und 4 relativ zueinander die zackenförmigen Vorsprünge der Metallisierung 15 des ersten Resonators 2 teilweise die zwischen den zackenförmigen Aussparungen gebildeten Vorsprünge des ersten Resonators 4. Dadurch ändert sich die Resonanzfrequenz des Systems, was zur Bestimmung eines Drehwinkels oder einer Torsionsverdrehung verwendet werden kann.

Es sei angemerkt, dass die in den Figuren 5a bzw. 5b gezeigte Ausgestaltung der Metallisierungen der Resonatoren auch derart verwendet werden können, dass zwei Resonatoren entweder nur die in Figur 5a dargestellte Ausgestaltung oder die in Figur 5b dargestellte Ausgestaltung der Metallisierung aufweisen können. Dabei ändert sich dann bei einer Drehung der beiden derart ausgestalteten Resonatoren zueinander der Betrag an Überlappung der jeweiligen Vorsprünge bzw. Aussparungen.

In den Figuren 6a und 6b ist eine Ausgestaltung von Resonatoren 2, 4 gemäß einem fünften Ausführungsbeispiel der vorliegenden Erfindung dargestellt. Gleiche bzw. gleichartige Teile sind wieder mit dem gleichen Bezugszeichen wie in den vorhergehenden Ausführungsbeispielen bezeichnet.

Wie in den Figuren 6a und 6b gezeigt, ist beim ersten Resonator 2 die Metallisierung 15 auf der Trägerplatte 8 derart ausgebildet, dass die Metallisierung 15 eine Vielzahl von im wesentlichen rechteckigen Vorsprüngen 15 an ihrem äußeren Umfang aufweist (verlgeiche die Figur 6b). Der zweite Resonator 4 weist am inneren Umfang seiner Metallisierung 16 ebenfalls rechteckige Vorsprünge auf, so dass zwischen den rechteckigen Vorsprüngen der Metallisierung 16 rechteckige Aussparungen entstehen, welche den rechteckigen Vorsprüngen der Metallisierung 15 des ersten Resonators 2 entsprechen. In der Ausgangsstellung können die beiden Resonatoren 2 und 4 wieder wie in einem der vorher beschriebenen Fälle 1 bis 3 angeordnet sein, wobei insbesondere bei einer nur teilweisen Überlappung der Vorsprünge (Fall 3) wieder die Drehrichtung bestimmbar ist. Bei einer Verdrehung der beiden Resonatoren 2 und 4 relativ zueinander, ändert sich die Resonanzfrequenz oder die Amplitude des von den Resonatoren rückgestreuten Signals bei einer festen Frequenz, was als Maß für den Drehwinkel herangezogen werden kann.

Es sei noch angemerkt, dass die in den Figuren 6a und 6b jeweils dargestellte Ausgestaltung der Metallisierungen auch derart verwendet werden können, dass zwei Resonatoren mit gleicher Ausgestaltung der Metallisierung (z.B. der in Figur 6a oder der in Figur 6b dargestellten Art der Metallisierung) ausgestattet werden können.

In den Figuren 7a und 7b sind zwei Resonatoren 2 und 4 gemäß einem sechsten Ausführungsbeispiel der vorliegenden Erfindung dargestellt. Gleiche Teile sind wieder mit den gleichen Bezugszeichen wie in den vorhergehenden Ausführungsbeispielen bezeichnet.

Im wesentlichen entspricht das in den Figuren 7a und 7b dargestellte sechste Ausführungsbeispiel dem fünften Ausführungsbeispiel. Im Unterschied zum fünften Ausführungsbeispiel sind jedoch beim sechsten Ausführungsbeispiel die Vorsprünge der Metallisierungen 15 und 16 derart ausgebildet, dass sie eine kleinere Breite und jeweils einen geringeren Abstand voneinander aufweisen. Hierbei ist anzumerken, dass je größer die Wiederholrate der Vorsprünge ist, desto kleinere Winkel gemessen werden können. Ansonsten entsprechen die Resonatoren 2, 4 des sechsten Ausführungsbeispiels dem des fünften Ausführungsbeispiels.

In Figur 8 ist eine Frequenzverschiebung bei einer relativen Drehung der in den Figuren 7a und 7b dargestellten Resonatoren gemäß dem sechsten Ausführungsbeispiel dargestellt. Hierbei gibt Δϕ die jeweilige Änderung zum Absolutwinkel von ϕ = 0° an.

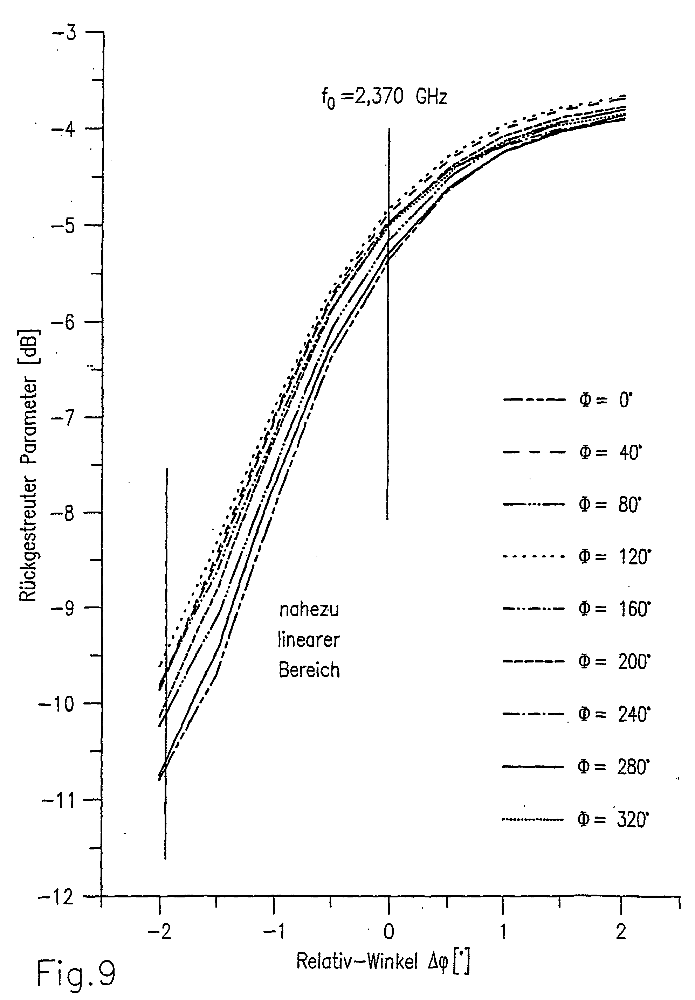

In Figur 9 ist eine Änderung des Signals bei einer festen Frequenz von f₀ = 2,370 GHz in Abhängigkeit von der Verdrehung der Resonatorscheiben gegeneinander dargestellt. Dabei wurden ebenfalls die in den Figuren 7a und 7b dargestellten Resonatorscheiben gemäß dem sechsten Ausführungsbeispiel verwendet. Wie aus Figur 9 ersichtlich ist, ergibt sich hierbei ein nahezu linearer Bereich, so dass für die Änderungen des Verdrehwinkels ϕ ein nahezu lineares Signal erhalten werden kann.

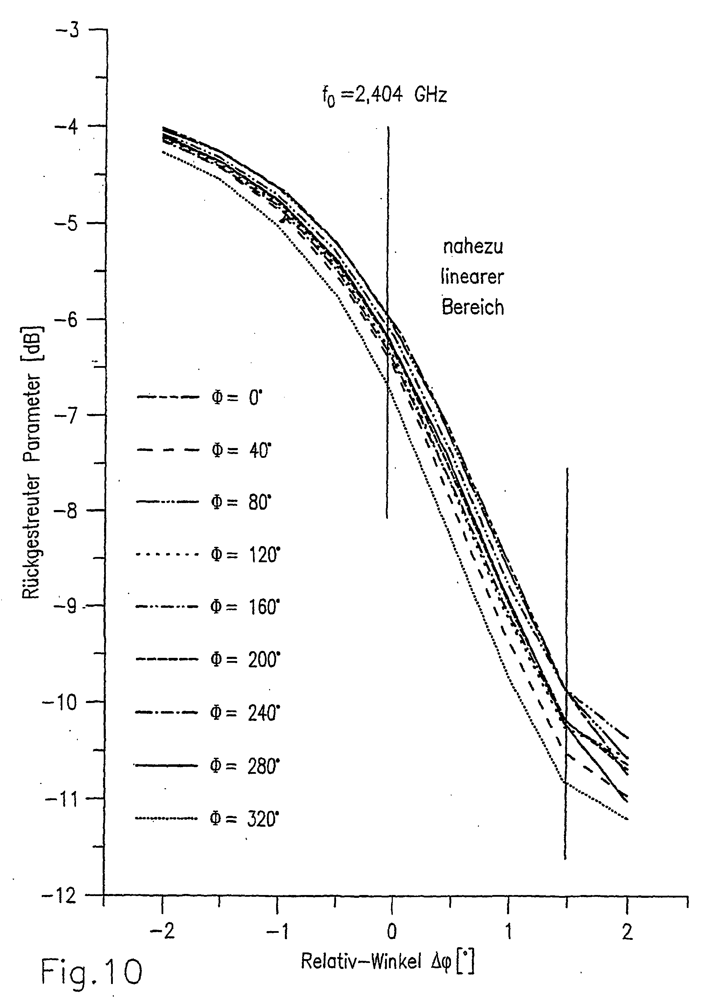

In Figur 10 sind Kurven für eine feste Frequenz entsprechend Figur 9 dargestellt, wobei jedoch als Frequenz eine Frequenz von f₀ = 2,404 GHz gewählt wurde. Hierbei ergibt sich ebenfalls ein nahezu linearer Bereich, in welchem ein nahezu lineares Signal erhalten werden kann.

Somit betrifft die vorliegende Erfindung eine Messvorrichtung bzw. ein Verfahren zur berührungslosen Erfassung eines Drehwinkels bzw. einer Torsionsverdrehung. Die Messvorrichtung umfaßt einen ersten Resonator 2 und einen zweiten Resonator 4. Die beiden Resonatoren 2, 4 weisen einen im wesentlichen kreisförmigen Umfang auf, an welchem mindestens ein Vorsprung und/oder eine Aussparung angeordnet ist. Die beiden Resonatoren 2, 4 sind koplanar zueinander angeordnet und sind auch relativ zueinander drehbar angeordnet. Weiter ist eine Erregervorrichtung 6 zur Anregung der Resonatoren sowie eine Empfangsvorrichtung 6 zur Messung eines rückgestreuten Signals vorhanden. Bei einer Relativdrehung der beiden Resonatoren 2, 4 zueinander ändert sich die Resonanzfrequenz oder die Amplitude des rückgestreuten Signals, was als Maß für die Ermittlung des Drehwinkels verwendet wird.

## Patentansprüche

1. Messvorrichtung zur berührungslosen Erfassung eines . Drehwinkels oder einer Torsionsverdrehung eines sich drehenden Elements (10), umfassend einen ersten Resonator (2), einen zweiten Resonator (4), eine Erregervorrichtung (6) und eine Empfangsvorrichtung (6), wobei die Resonatoren (2, 4) einen im wesentlichen kreisförmigen Umfang aufweisen, wobei an dem im wesentlichen kreisförmigen Umfang mindestens ein Vorsprung und/oder eine Aussparung vorhanden ist, wobei die Resonatoren (2, 4) koplanar zueinander und relativ drehbar zueinander angeordnet sind, und wobei mindestens ein Resonator mit dem sich drehenden Element (10) verbunden ist.

2. Messvorrichtung zur berührungslosen Erfassung eines Drehwinkels oder einer Torsionsverdrehung nach Anspruch 1, **dadurch gekennzeichnet, dass** die Resonatoren (2, 4) ringförmig ausgebildet sind.

3. Messvorrichtung zur berührungslosen Erfassung eines Drehwinkels oder einer Torsionsverdrehung nach Anspruch 1, **dadurch gekennzeichnet, dass** die Resonatoren (2, 4) kreisförmig ausgebildet sind.

4. Messvorrichtung zur berührungslosen Erfassung eines Drehwinkels oder einer Torsionsverdrehung nach einem der Ansprüche 1 bis 3, **dadurch gekennzeichnet, dass** die Aussparung als Schlitz (3, 5) ausgebildet ist.

5. Messvorrichtung zur berührungslosen Erfassung eines Drehwinkels oder einer Torsionsverdrehung nach Anspruch 4, **dadurch gekennzeichnet, dass** die Schlitze (3, 5) durchgehend ausgebildet sind.

6. Messvorrichtung zur berührungslosen Erfassung eines Drehwinkels oder einer Torsionsverdrehung nach Anspruch 2, **dadurch gekennzeichnet, dass** der erste Resonator (2) einen kleineren Außendurchmesser als der zweite Resonator (4) aufweist.

7. Messvorrichtung zur berührungslosen Erfassung eines Drehwinkels oder einer Torsionsverdrehung nach Anspruch 6, **dadurch gekennzeichnet, dass** der erste Resonator (2) einen Außendurchmesser (D₁) aufweist, welcher kleiner als der Innendurchmesser (D₂) des zweiten Resonators (4) ist.

8. Messvorrichtung zur berührungslosen Erfassung eines Drehwinkels oder einer Torsionsverdrehung nach einem der Ansprüche 1 bis 7, **dadurch gekennzeichnet, dass** die Resonatoren (2, 4) aus Leiterplattenmaterial mit einer darauf angebrachten Metallisierung (15, 16) gebildet sind.

9. Messvorrichtung zur berührungslosen Erfassung eines Drehwinkels oder einer Torsionsverdrehung nach einem der Ansprüche 1 bis 8, **dadurch gekennzeichnet, dass** eine einzige Antenne (6) gleichzeitig als Erregervorrichtung und als Empfangsvorrichtung vorgesehen ist.

10. Messvorrichtung zur berührungslosen Erfassung eines Drehwinkels oder einer Torsionsverdrehung nach einem der Ansprüche 1 bis 9, **dadurch gekennzeichnet, dass** die Resonatoren (2, 4) mit einem Mikrowellenspektrum angeregt werden oder dass die Resonatoren (2, 4) mit genau einer Frequenz angeregt werden, wobei die Frequenz in der Flanke der Resonanzkurve liegt.

11. Verfahren zur Ermittlung eines Drehwinkels oder einer Torsionsverdrehung, bei dem zwei mit mindestens einem Vorsprung und/oder einer Aussparung (3, 5) versehene Resonatoren (2, 4) angeregt werden, wobei die beiden Resonatoren (2, 4) einen im wesentlichen kreisförmigen Umfang aufweisen und drehbar zueinander angeordnet sind und eine Drehung des einen Resonators relativ zum anderen Resonator zu einer Änderung ihrer Resonanzfrequenz oder zu einer Änderung einer Amplitude des von den Resonatoren (2, 4) rückgestreuten Signals bei einer festen Frequenz führt und die Änderung der Resonanzfrequenz bzw. der Amplitude als Maß für die Ermittlung des Drehwinkels verwendet wird.

## Claims

1. Measurement apparatus for non-contact detection of a rotation angle or of torsional twisting of a rotating element (10), comprising a first resonator (2), a second resonator (4), an excitor apparatus (6) and a receiving apparatus (6), with the resonators (2, 4) having an essentially circular circumference, with at least one projection and/or one cutout being provided on the essentially circular circumference, with the resonators (2, 4) being arranged coplanar with respect to one another and such that they can rotate relative to one another, and with at least one resonator being connected to the rotating element (10).

2. Measurement apparatus for non-contact detection of a rotation angle or of torsional twisting according to Claim 1, **characterized in that** the resonators (2, 4) are annular.

3. Measurement apparatus for non-contact detection of a rotation angle or of torsional twisting according to Claim 1, **characterized in that** the resonators (2, 4) are circular.

4. Measurement apparatus for non-contact detection of a rotation angle or of torsional twisting according to one of Claims 1 to 3, **characterized in that** the cutout is in the form of a slot (3, 5).

5. Measurement apparatus for non-contact detection of a rotation angle or of torsional twisting according to Claim 4, **characterized in that** the slots (3, 5) are continuous.

6. Measurement apparatus for non-contact detection of a rotation angle or of torsional twisting according to Claim 2, **characterized in that** the first resonator (2) has a smaller external diameter than the second resonator (4).

7. Measurement apparatus for non-contact detection of a rotation angle or of torsional twisting according to Claim 6, **characterized in that** the first resonator (2) has an external diameter (D₁) which is smaller than the internal diameter (D₂) of the second resonator (4).

8. Measurement apparatus for non-contact detection of a rotation angle or of torsional twisting according to one of Claims 1 to 7, **characterized in that** the resonators (2, 4) are formed from printed circuit board material with metallization (15, 16) applied to it.

9. Measurement apparatus for non-contact detection of a rotation angle or of torsional twisting according to one of Claims 1 to 8, **characterized in that** a single antenna (6) is provided at the same time as an excitor apparatus and as a receiving apparatus.

10. Measurement apparatus for non-contact detection of a rotation angle or of torsional twisting according to one of Claims 1 to 9, **characterized in that** the resonators (2, 4) are excited with a microwave spectrum, or **in that** the resonators (2, 4) are excited at one and only one frequency, with the frequency being on the flank of the resonance curve.

11. Method for determination of a rotation angle or of torsional twisting, in which two resonators (2, 4) are stimulated, which are provided with at least one projection and/or one cutout (3, 5), with the two resonators (2, 4) having an essentially circular circumference and being arranged such that they can rotate with respect to one another, and rotation of one resonator relative to the other resonator leading to a change in their resonant frequency or to a change in the amplitude of the signal which is scattered back from the resonators (2, 4) at a fixed frequency, and the change in the resonant frequency or the amplitude being used as a measure for the determination of the rotation angle.

## Revendications

1. Dispositif de mesure pour la détermination sans contact d'un angle de rotation ou d'une rotation de torsion d'un élément tournant (10), comprenant un premier résonateur (2), un deuxième résonateur (4), un dispositif d'excitation (6) et un dispositif de réception (6), dont les résonateurs (2, 4) présentent un contour essentiellement circulaire, avec au moins une saillie et/ou une cavité dans le contour essentiellement circulaire,
dans lequel
les résonateurs (2, 4) sont coplanaires l'un à l'autre et peuvent tourner l'un par rapport à l'autre, et au moins un résonateur est relié à l'élément tournant (10).

2. Dispositif de mesure pour la détermination sans contact d'un angle de rotation ou d'une rotation de torsion selon la revendication 1,
**caractérisé en ce que**
les résonateurs (2, 4) sont de forme annulaire.

3. Dispositif de mesure pour la détermination sans contact d'un angle de rotation ou d'une rotation de torsion selon la revendication 1,
**caractérisé en ce que**
les résonateurs (2, 4) sont de forme circulaire.

4. Dispositif de mesure pour la détermination sans contact d'un angle de rotation ou d'une rotation de torsion selon l'une quelconque des revendications 1 à 3,
**caractérisé en ce que**
la cavité a la forme d'une fente (3, 5).

5. Dispositif de mesure pour la détermination sans contact d'un angle de rotation ou d'une rotation de torsion selon la revendication 4,
**caractérisé en ce que**
les fentes (3, 5) sont traversantes.

6. Dispositif de mesure pour la détermination sans contact d'un angle de rotation ou d'une rotation de torsion selon la revendication 2,
**caractérisé en ce que**
le premier résonateur (2) présente un diamètre extérieur plus petit que le deuxième résonateur (4).

7. Dispositif de mesure pour la détermination sans contact d'un angle de rotation ou d'une rotation de torsion selon la revendication 6,
**caractérisé en ce que**
le premier résonateur (2) présente un diamètre extérieur (D₁) qui est plus petit que le diamètre intérieur (D₂) du deuxième résonateur (4).

8. Dispositif de mesure pour la détermination sans contact d'un angle de rotation ou d'une rotation de torsion selon l'une quelconque des revendications 1 à 7,
**caractérisé en ce que**
les résonateurs (2, 4) sont formés en un matériau de plaquette à circuits imprimés avec une métallisation (15, 16) déposée sur celle-ci.

9. Dispositif de mesure pour la détermination sans contact d'un angle de rotation ou d'une rotation de torsion selon l'une quelconque des revendications 1 à 8,
**caractérisé en ce qu'**
il est prévu une unique antenne (6) faisant office en même temps de dispositif d'excitation et de dispositif de réception.

10. Dispositif de mesure pour la détermination sans contact d'un angle de rotation ou d'une rotation de torsion selon l'une quelconque des revendications 1 à 9,
**caractérisé en ce que**
les résonateurs (2, 4) sont excités avec un spectre de micro-ondes ou les résonateurs (2, 4) sont excités exactement avec une fréquence, la fréquence se situant dans le flanc de la courbe de résonance.

11. Procédé pour la détermination d'un angle de rotation ou d'une rotation de torsion, dans lequel on excite au moins deux résonateurs (2, 4) pourvus d'une saillie et/ou d'une cavité (3, 5), les deux résonateurs (2, 4) présentant un contour essentiellement circulaire et étant disposés de façon rotative l'un par rapport à l'autre, et une rotation de l'un des résonateurs par rapport à l'autre conduisant à une modification de leur fréquence de résonance ou à une modification d'une amplitude du signal rétro-diffusé par les résonateurs (2, 4) pour une fréquence fixe, et la modification de la fréquence de résonance ou de l'amplitude étant utilisée comme mesure pour la détermination de l'angle de rotation.
